# EUROPÄISCHE PATENTSCHRIFT

(11) **EP 2 010 773 B1**
(45) Veröffentlichungstag und Bekanntmachung des Hinweises auf die Patenterteilung: **01.09.2010**
(21) Anmeldenummer: 07726757.3
(22) Anmeldetag: 09.03.2007
(51) Int. Cl.: F02C 3/16, F01D 5/18, F02K 3/08, F02K 3/10, F01D 9/06, F23R 3/28

(54) **TURBINENSCHAUFEL FÜR EINE TURBINE**
BLADE FOR A TURBINE
AUBE DE TURBINE

(30) Priorität: 21.04.2006 EP 06008321
(43) Veröffentlichungstag der Anmeldung: 07.01.2009
(73) Patentinhaber: SIEMENS AKTIENGESELLSCHAFT, 80333 München (DE)
(72) Erfinder: BEECK, Alexander Ralph, Orlando, FL 32828 (US); HOFFMANN, Stefan, 35119 Rosenthal (DE)
(86) Internationale Anmeldenummer: PCT/EP2007/052235
(87) Internationale Veröffentlichungsnummer: WO 2007/122040

(56) Entgegenhaltungen:
- EP-A2- 1 431 543
- WO-A-99/46540
- WO-A-2005/003517
- DE-A1- 2 253 843
- US-A1- 2005 217 270
- US-B1- 6 298 667

## Beschreibung

Die Erfindung betrifft eine Turbinenschaufel für eine Turbine, mit einer Schaufelwand und mit einem ersten Kanal zum Führen eines ersten Mediums und einem zweiten Kanal zum Führen eines der Turbinenschaufel vom ersten Medium getrennt zuführbaren zweiten Mediums, wobei die Turbinenschaufel zum Vermischen der beiden getrennt zuführbaren Medien zu einem Gemisch mindestens eine im Inneren oder in der Schaufelwand angeordnete Kammer aufweist, die mit beiden Kanälen über jeweils eine Verbindungsleitung verbunden ist.

Eine derartige Turbinenschaufel ist beispielsweise aus der WO 2005/3517 A1 bekannt. Die das Schaufelblatt bildenden Schaufelwände umgeben einen Hohlraum, in dem Kühlluft strömbar ist. Außerdem sind in der Schaufelwand der Turbinenschaufel weitere Kanäle zum Führen eines zweiten Mediums, nämlich Brennstoff, vorgesehen. Durch mehrere, durch die Schaufelwand der Turbinenschaufel verlaufende Durchgangsbohrungen kann das im Inneren der Turbinenschaufel strömende Kühlmittel nach außen in einen Heißgasraum austreten. Um ein brennbares Gemisch noch in der Schaufelwand herzustellen, sind in dieser Verbindungsleitungen vorgesehen, welche die brennstoffführenden Kanäle mit den Durchgangsbohrungen verbinden. Somit kann sich Brennstoff mit Kühlluft noch innerhalb der Durchgangsbohrungen vermischen und als brennbares Gemisch in das die Turbinenschaufel umströmende Heißgas einströmen. Mit einer solchen Turbinenschaufel kann sowohl das die Turbine durchströmende Heißgas als auch die aus der Turbinenschaufel ausströmende Kühlluft durch das Verbrennen des Gemischs nachgeheizt werden, was im Allgemeinen zur Leistungsgradsteigerung der Gasturbine, zur Reduzierung der Schadstoffemissionen und zur Verbesserung des Wirkungsgrades der Gasturbine durchgeführt wird und als eine Form der Carnotisierung bekannt ist. Diese Form der nachträglichen Energieanreicherung des Heißgases in der Turbine ist auch als "in-situ blade reheat" bekannt.

Außerdem ist aus der WO 99/46540 A1 eine Brennkammer mit einer Vielzahl von porösen Hitzeschildelementen bekannt, durch die ein brennbares Gemisch nachträglich, d.h. außerhalb von Brennern der Gasturbine, in den Verbrennungsraum einer Gasturbine eingebracht werden kann.

Ein Nachteil bei der aus dem Stand der Technik bekannten Turbinenschaufel betrifft die Herstellung der Kanäle, der Kammer und der Auslassleitung, sofern die Turbinenschaufel und deren Hohlräume im Gießverfahren hergestellt werden. Diese Hohlräume sind mittels meist komplexer Gusskerne vergleichsweise aufwändig herzustellen. Hierzu ist ein entsprechend der gewünschten Hohlraumstruktur komplex strukturierter Gusskern und/oder Gussschale erforderlich, welche jedoch kostenintensiv und nur mit Aufwand sicher und exakt in der Gusssvorrichtung zu platzieren sind, so dass sich beim Gießen von Turbinenschaufeln mit solch komplexen Strukturen meist eine erhöhte Ausschussrate einstellt.

Werden dagegen die in der Schaufelwand vorgesehenen Hohlräume mittels unterschiedlicher Beschichtungen hergestellt, so ist die dafür notwendige Maskierung der unbeschichteten Roh-Bauteile ein besonders aufwändiger Arbeitsschritt, welcher zu einer verzögerten und verteuerten Herstellung führt.

Die Aufgabe der vorliegenden Erfindung ist demnach die Bereitstellung einer gattungsgemäßen Turbinenschaufel, welche besonders einfach und kostengünstig herzustellen ist.

Die durch die Erfindung vorgeschlagene Lösung sieht vor, dass die Kammer und/oder die Auslassleitung zumindest durch einen in der Wand sitzenden Einsatz teilweise begrenzt bzw. gebildet sind.

Die Erfindung geht von der Erkenntnis aus, dass die Turbinenschaufel möglichst einfach herzustellen ist, wenn die im Inneren oder in der Wand der Turbinenschaufel zum Führen oder zum Mischen der beiden Medien benötigten Hohlräume nicht gleichzeitig mit der Schaufelwand, sondern in einem oder mehreren parallel durchführbaren Arbeitsschritten hergestellt werden. Es wird vorgeschlagen, die Turbinenschaufel aus einem Grundkörper und mindestens einem Einsatz zusammenzusetzen, wobei der Grundkörper die Wand der Turbinenschaufel umfasst, in welche der Einsatz eingesetzt wird. Der Einsatz begrenzt zumindest teilweise die Kammer, in der die beiden Medien miteinander vermischt werden und/oder die Auslassleitung erstreckt sich durch den Einsatz. Dadurch ist es möglich, einen einfach strukturierten Grundkörper mit einer für den Einsatz vorgesehenen Ausnehmung sowie einen Einsatz mit komplexen Hohlstrukturen durch gängige Herstellungswerkzeuge jeweils kostengünstig zu fertigen.

Mit der Erfindung wird folglich eine besonders einfache und kostengünstige Turbinenschaufel vorgeschlagen, wodurch die bei der Herstellung auftretende Ausschussrate verringert werden kann. Insbesondere die Ausschussrate des vorzugsweise gegossenen Grundkörpers kann somit reduziert werden. Außerdem ist es möglich, durch die Verwendung unterschiedlicher Einsätze in identischen Grundkörpern an ihrer Oberfläche unterschiedlich wirkende Turbinenschaufeln in variantenreicher Art kostengünstig zu fertigen.

Weiterer Vorteil von getrennt hergestellten Komponenten der Turbinenschaufel ist eine erhöhte Fertigungsgenauigkeit. Toleranzen, sowohl die der Grundkörper als auch die des Einsatzes, können enger gewählt werden, ohne gleichzeitig damit die Ausschussrate zu erhöhen. Wenn beispielsweise der komplex strukturierte Einsatz nicht den konstruktiven Vorgaben bezüglich seiner Abmaße genügt, ist lediglich der Einsatz selbst und nicht das ganze Bauteil als Ausschuss unbrauchbar. Dies spart Herstellungskosten.

In den Unteransprüchen sind vorteilhafte Ausgestaltungen der Erfindung angegeben.

In einer ersten Ausgestaltung der Erfindung weist die Schaufelwand in ihrer dem Heißgasraum zugewandten Oberfläche eine Ausnehmung mit einer rechteckigen oder insbesondere kreisrunden Kontur auf, in welche der Einsatz mit einer zur Kontur der Ausnehmung korrespondierenden Kontur eingesetzt ist. Insbesondere kreisrunde Ausnehmungen sind in der Schaufelwand besonders einfach und kostengünstig, beispielsweise durch spanende Verfahren, herstellbar. Ebenso günstig kann ein Einsatz aus einem zylindrischen, beispielsweise massiven metallischen Körper hergestellt werden, in den nachträglich Auslassleitungen mit präzisen Geometrien eingearbeitet werden. Ausnehmungen mit im Wesentlichen rechteckigen Konturen lassen sich in der Oberfläche der Schaufelwand beispielsweise durch Fräsen herstellen.

Anstelle einer durch Bohren oder Fräsen hergestellten Ausnehmung kann die den Einsatz aufnehmende Ausnehmung, sofern die Schaufelwand bzw. der Grundkörper durch Gießen hergestellt wird, unmittelbar beim Gießen durch eine entsprechend geformte Gussschale oder Gusskern hergestellt werden. Auch ist denkbar, den Einsatz als Teil eines Gusskernes in der Gießvorrichtung zu verwenden, wobei jedoch der Einsatz mit der herzustellenden Turbinenschaufel vergossen wird und in diesem nach Entfernen des restlichen Gusskernes verbleibt.

In einer zweiten vorteilhaften Ausgestaltung ist eine Anzahl von Kammern in der Turbinenschaufel oder in der Schaufelwand vorgesehen, bei der jeder Kammer mindestens eine Auslassleitung zugeordnet ist. Hierdurch wird erreicht, dass die Turbinenschaufel nicht nur eine, sondern eine Vielzahl von Auslassleitungen aufweist, durch die das Gemisch in den Heißgasraum eingeblasen werden kann. Folglich ist damit eine flächige Einbringung des Gemischs in den Heißgasraum möglich.

Gemäß einer weiteren Ausgestaltung sind in der Auslassleitung Verwirbelungselemente vorgesehen, die eine weitere besonders effiziente Vermischung der beiden in der Kammer zusammengebrachten Medien herbeiführen. Dies ist dann insbesondere von Vorteil, wenn eines der beiden Medien ein Brennstoff ist und das andere Medium das Oxidationsmittel für den Brennstoff darstellt. Das Oxidationsmittel ist vorzugsweise Kühlluft, welche zur Kühlung der Turbinenschaufel bzw. der den Heißgasraum begrenzenden Schaufelwand vorgesehen ist. Durch die besonders effiziente und somit homogene Vermischung der beiden Medien kann im vorliegenden Fall nach dem Eintritt des Gemischs in den Heißgasraum aufgrund der dort auftretenden Temperaturen eine selbsttätige Entzündung des Gemischs stattfinden, welches zum emissionsarmen Nachheizen des die Turbine durchströmenden Heißgases bzw. zum Nachheizen der Kühlluft genutzt wird. Nach der Selbstzündung des Gemisches verbrennt dieses unter Bildung einer Vormischflamme emissionsarm und erhöht durch Abgabe von Wärme den Energiegehalt des Heißgases, was zu einer gesteigerten Nutzleistungsabgabe der mit der Turbinenschaufel ausgestatteten Turbine führt.

In einer weiteren alternativen Ausgestaltung ist denkbar, dass jede Kammer und die jeweils ihr zugeordnete Auslassleitung mittels eines separaten Einsatzes gebildet ist. Dies ermöglicht die Verwendung unterschiedlicher Einsätze je nach lokaler Anforderung an das ausströmende Gemisch bzw. je nach den im Heißgasraum auftretenden Randbedingungen.

Vorteilhafterweise kann eine Gruppe von Kammern und die mit diesen Kammern verbundenen Auslassleitungen mittels eines einzigen separaten Einsatzes gebildet sein. Eine derartige Ausgestaltung führt zu einer Turbinenschaufel mit einer geringen Anzahl von Einsätzen.

Darüber hinaus wird vorgeschlagen, dass jeder Einsatz mehrere Auslassleitungen aufweisen kann, welche eine gemeinsame Kammer mit dem Heißgasraum verbinden. Dies führt zu besonders einfach ausgestalteten Einsätzen.

Mit der Erfindung wird ferner vorgeschlagen, dass der Einsatz mehrteilig ausgebildet ist. Ein mehrteiliger Einsatz erlaubt die besonders kostengünstige und einfache Herstellung von Auslassleitungen, sofern diese etwas aufwändigere Innenoberflächen aufweisen sollen; wenn beispielsweise auf der Innenoberfläche der Auslassleitung Turbulatoren oder Verwirbelungselemente zur weiter verbesserten Durchmischung der Reaktionspartner vorgesehen sind. Der Einsatz kann beispielsweise aus mehreren Schichtelementen gebildet sein, die gestapelt aneinander liegen und dabei die Kammer und/oder die Auslassleitungen bilden. Beispielsweise kann auch ein Einsatz aus mehreren Elementen zusammengesetzt sein, von denen das dem Heißgasraum zugewandte äußerste Element aus einem porösen Material oder aus einem metallischen Schaum gebildet ist. Der Einsatz kann aber auch vollständig aus dem porösen Material oder Schaum gebildet sein. Poröses Material und metallischer Schaum sind besonders geeignet, eine gleichmäßige Ausdüsung des Gemischs an ihrer dem Heißgas zugewandten Oberfläche nach Art einer flächigen Effusionskühlung herbeizuführen. Insbesondere, wenn das Gemisch als brennbares Gemisch zum Nachheizen des die Turbine durchströmenden Heißgases geeignet ist, kann eine besonders emissionsarme Verbrennung des Gemischs aufgrund einer sich einstellenden Mikrodiffusionsflamme erreicht werden.

Es wird ferner vorgeschlagen, dass die Auslassleitung in einen Bereich der Schaufelwand mündet, in dem im Heißgas auftretende Schockwellen auftreffen. Die im Heißgas auftretenden Schockwellen führen eine weitere Verbesserung bzgl. der Vermischung der beiden in der Kammer (vor-)gemischten Medien herbei, was sich wiederum vorteilhaft auf die selbstzündende Verbrennung des Gemischs auswirkt.

Wenn die Turbinenschaufel ein Schaufelblatt umfasst, welches eine saugseitige Schaufelwand und eine druckseitige Schaufelwand aufweist, wobei die Schaufelwände entlang einer Sehne sich von einer Vorderkante zu einer Hinterkante mit einer Sehnenlänge erstrecken und bei dem die Auslassleitung - in Strömungsrichtung des das Schaufelblatt umströmenden Heißgases betrachtet - im hinteren Drittel der Sehnenlänge an der Oberfläche der saugseitigen Schaufelwand mündet, kann eine besonders effiziente, vom im Heißgas auftretenden Wirbeln unterstützte Vermischung erfolgen, da bevorzugt in diesem Bereich die Schockwellen auf dem Schaufelblatt der Turbinenschaufel auftreffen.

Die Schaufelwand der Turbinenschaufel wirdvorzugsweies von einem gegossenen Grundkörper gebildet. In diesem Fall ist der in der Ausnehmung der Wand eingesetzte Einsatz mit dem gegossenen Grundkörper verschweißt oder verlötet, um einen besonders sicheren Sitz des Einsatzes in der Schaufelwand zu gewährleisten. Außerdem führt eine entlang der Verbindungskontur endlose Verschweißung des Einsatzes mit dem Grundkörper zu einem gasdichten Abschluss der Kammer, welche von dem Einsatz zumindest teilweise begrenzt wird.

Selbstverständlich kann die vorgeschlagene Turbinenschaufel auch zur Zugabe anderer fluider Medien als Brennstoff oder Luft innerhalb einer Turbine, unabhängig davon ob Gas- oder Dampfturbine, eingesetzt werden.

Die Ausblasung beider Medien erfolgt insgesamt in einer Art und Weise, die außerdem eine schleunigste Vermischung im Heißgasraum nach kürzester Strecke und nach kürzester Zeit bedingt. Damit wird sichergestellt, dass im Heißgasraum das äußerst homogene Gemisch aus beiden Medien zur Nachheizung des die Turbine durchströmenden Heißgases aufgrund der im Heißgas herrschenden Temperatur sich selbsttätig entzündet. Dies ermöglicht eine besonders emissionsarme Verbrennung des im ersten Vermischungsschritt hergestellten brennbaren Gemischs durch Vormischflammen.

Durch die Vermischung innerhalb einer kurzen Reaktionsstrecke und Reaktionszeit wird außerdem erreicht, dass das Gemisch noch vor dem Verlassen des ringkanalförmigen Heißgasraumes verbrennt, da die durch die Nachheizung des Heißgases bzw. der Kühlluft stattfindende Energieerhöhung des Heißgases nur dann zur Leistungssteigerung und Wirkungsgradsteigerung der Turbine beträgt, wenn das nachgeheizte Heißgas bzw. die nachgeheizte Kühlluft noch an den Laufschaufeln der Turbine zur Umsetzung der Strömungsenergie in mechanische Energie vorbeiströmt.

Vorteilhafte Ausgestaltungen sind in den Unteransprüchen angegeben und dienen zur weiteren Erläuterung der Erfindung unter Nennung weiterer Vorteile.

Es zeigen:
- FIG 1: eine Gasturbine in einem Längsteilschnitt,
- FIG 2: ein Schaufelblatt einer Turbinenschaufel als erfin- dungsgemäßes Bauteil in einer perspektivischen Dar- stellung,
- FIG 3: einen zylindrischen Einsatz für das Schaufelblatt der Turbinenschaufel in einer perspektivischen Dar- stellung,
- FIG 4: einen Schnitt durch einen Einsatz gemäß FIG 3,
- FIG 5: die Druckverteilung entlang der saugseitigen und druckseitigen Schaufelwand des Schaufelblatts der Turbinenschaufel,
- FIG 6: einen schematischen Querschnitt durch das Schaufel- blatt der Turbinenschaufel,
- FIG 7: einen Querschnitt durch einen aus gestapelten Schichtelementen zusammengesetzten Einsatz,
- FIG 8: eine Explosionszeichnung des in FIG 7 dargestellten Einsatzes,
- FIG 9: eine teilgeschnittene perspektivische Ansicht der Vorderkante des Schaufelblatts der Turbinenschau- fel,
- FIG 10: in einer geschnittenen perspektivischen Darstellung die Vorderkante der Turbinenschaufel,
- FIG 11: den Einsatz gemäß FIG 12 in einer perspektivischen Explosionszeichnung,
- FIG 12: eine geschnittene perspektivische Darstellung der Vorderkante der Turbinenschaufel mit einem in der Kontur rechteckigen Einsatz und
- FIG 13: eine Schaufelwand im Querschnitt mit einem porösen Schichtelement als Einsatz.

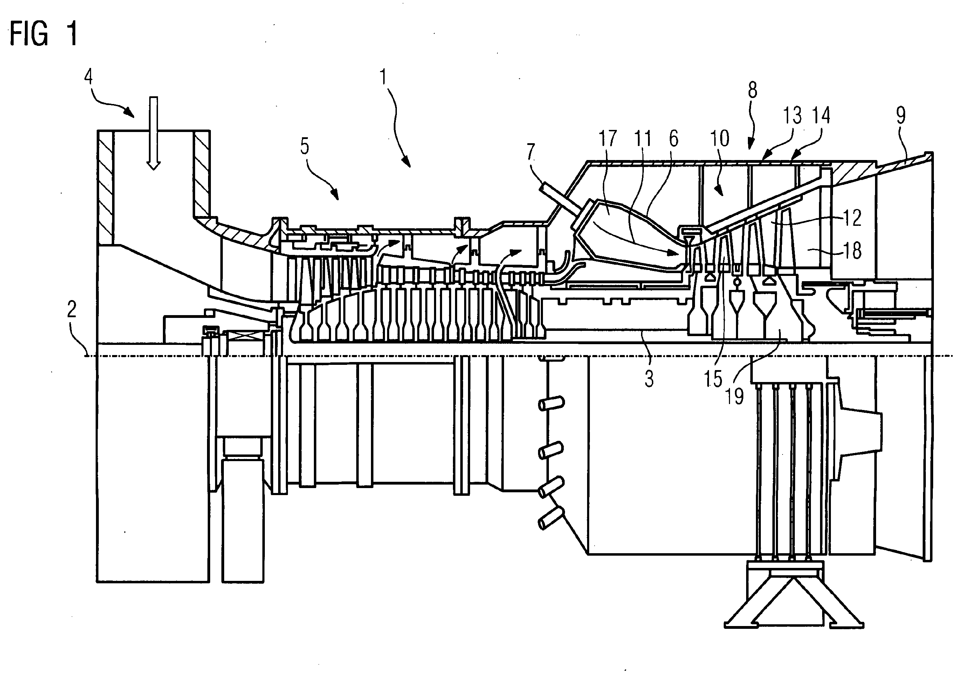

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 bildet einen Verbrennungsraum 17, der mit einem ringförmigen Heißgasraum 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgasraum 18 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Turbinenscheibe am Rotor 3 angebracht sind. An dem Rotor 3 ist ein Generator oder eine Arbeitsmaschine (nicht dargestellt) angekoppelt.

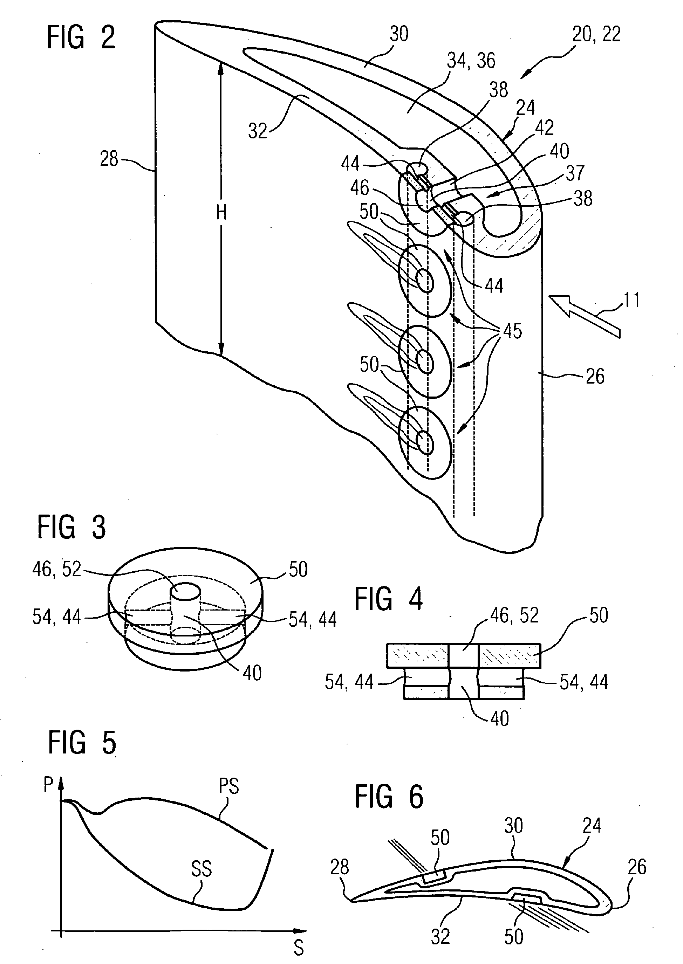

Um das den Heißgasraum 18 durchströmende Heißgas 11 im Bereich der Turbineneinheit 8 gemäß dem in-situ blade reheat Verfahrens nachzuheizen, sind die den Heißgasraum 18 begrenzenden Wände und/oder die im Heißgasraum 18 angeordneten Schaufelblätter von Turbinenschaufeln 20 als Bauteile 22 in geeigneter weise dazu ausgebildet. Hierzu zeigt FIG 2 das tragflügelförmige Schaufelblatt 24 der gegossenen Turbinenschaufel 20, welche als Laufschaufel 15 oder als Leitschaufel 12 ausgebildet sein kann. Das Schaufelblatt 24 erstreckt sich entlang einer Sehne mit einer Sehnenlänge von einer Vorderkante 26 zu einer Hinterkante 28, in Strömungsrichtung des Heißgases 11 gesehen. Dabei weist das Schaufelblatt 24 eine saugseitige Schaufelwand 30 und eine druckseitige Schaufelwand 32 auf, welche jeweils die Vorderkante 26 mit der Hinterkante 28 verbindet. Ein von den Schaufelwänden 30, 32 eingeschlossener Hohlraum 34 erstreckt sich über die gesamte Höhe H des Schaufelblattes 24 und bildet einen ersten Kanal 36, in dem ein erstes Medium M1, beispielsweise Kühlluft, strömbar ist. Die Kühlluft schützt dauerhaft das die Schaufelwände 30, 32 bildende Material vor den schädlichen Einflüssen des Heißgases 11, insbesondere vor dessen hohen Temperaturen, unter Anwendung einer offenen Kühlung.

Im Querschnitt gesehen ist ein Abschnitt 37 der druckseitigen Schaufelwand 32 etwas dicker ausgebildet als der restliche Abschnitt der Schaufelwand 32, so dass in diesem verdickten Abschnitt 37 zwei in der Wand verlaufende zweite Kanäle 38 ausgebildet sein können, die sich im Wesentlichen über die Höhe H des Schaufelblatts 24 erstrecken, welche Höhe H mit der Radialrichtung des Rotors 3 der Gasturbine 1 zusammenfällt.

Jedem zweiten Kanal 38 ist ein zweites Medium M2 zuführbar, welches erst unmittelbar vor dem Einblasen in das das Schaufelblatt 24 umströmende Heißgas 11 mit dem Medium M1 vermischt werden soll. Hierzu ist eine Mischkammer 40 vorgesehen, in der die beiden der Turbinenschaufel 20 getrennt zugeführten Medien M1, M2 erstmalig zusammengebracht werden.

Um das erste Medium M1 der Kammer 40 zuzuführen, erstreckt sich zwischen dem ersten Kanal 36 und der Kammer 40 eine erste Verbindungsleitung 42. Die erste Verbindungsleitung 42 ist als Bohrung ausgebildet, welche den aufgedickten Abschnitt 37 der druckseitigen Schaufelwand 32 durchdringt. Dabei ist die Verbindungsleitung 42 in der vorgeschlagenen Ausgestaltung zwischen den beiden sich in Radialrichtung erstreckenden zweiten Kanälen 38 vorgesehen.

Die Zufuhr des zweiten Mediums M2, beispielsweise Brennstoff, zu der Kammer 40 erfolgt durch zweite Verbindungsleitungen 44, welche sich zwischen den zweiten Kanälen 38 und der Kammer 40 erstrecken. Über eine Auslassleitung 46 kann das in der Kammer 40 entstehende Gemisch aus der Turbinenschaufel 20 aus- und in den Heißgasraum 18 einströmen, um dort durch seine Verbrennung den Wirkungsgrad der Turbine 8 durch Carnotisierung zu erhöhen.

Um das vorgenannte Schaufelblatt 24 besonders einfach und kostengünstig herzustellen, wird die dargestellte Struktur des Kanalsystems 45 aus ersten und zweiten Kanälen 36, 38 sowie ersten und zweiten Verbindungsleitungen 42, 44, Kammer 40 und Auslassleitung 46 modular hergestellt. Dazu schlägt die Erfindung vor, dass in einem Grundkörper bzw. in einer Schaufelwand 30, 32 ein Einsatz 50 vorgesehen ist, durch den die Kammer 40 zumindest teilweise begrenzt und in der die Auslassleitung 46 gebildet ist. In der aerodynamisch gewölbten Oberfläche des Schaufelblattes 24 bzw. im Grundkörper ist eine Ausnehmung für den Einsatz 50 vorhanden, welche keinen negativen Einfluss auf die Festigkeit des Bauteils 22 bzw. der Turbinenschaufel 20 hat. Dies gilt insbesondere dann, wenn die Ausnehmung in einem im Querschnitt aufgedickten Abschnitt 37 der Schaufelwand 32 vorgesehen ist. Durch den separat einzubringenden Einsatz 50 kann eine hohe Flexibilität und Genauigkeit für die Eindüsung des Gemischs in den Heißgasraum 18 mit einer guten Herstellbarkeit des Bauteils 22 kombiniert werden.

In der in FIG 2 dargestellten Turbinenschaufel 20 sind mehrere im aufgedickten Abschnitt 37 der Schaufelwand 32 vorgesehene Einsätze 50 mit jeweils einer kreisrunden Kontur in dazu korrespondierende Ausnehmungen eingesetzt, welche jeweils eine der Kammern 40 zumindest teilweise begrenzt und welche jeweils die Auslassleitung 46 aufweist. Die Tiefe jeder Ausnehmung ist so gewählt, dass sie der Dicke des zugehörigen Einsatzes 50 entspricht, so dass aus der Schaufelwand 32 hervorstehende Kanten aus aerodynamischen Gründen vermieden sind. Der Einsatz 50 kann entlang seiner kreisrunden oder auch beliebigen Kontur durch eine endlos umlaufenden Schweißnaht oder Verlötung mit der Schaufelwand 32 verbunden sein, damit dieser dicht in der Schaufelwand 32 sitzt.

Der in der Wand 32 eingesetzte couponartige Einsatz 50 ist in FIG 3 in perspektivischer Darstellung und in FIG 4 in geschnittener Darstellung gezeigt. Im Wesentlichen besteht der Einsatz 50 aus einem zylindrischen Körper oder Coupon, in dem eine konzentrische zentrale Bohrung 52 zur Herstellung der Auslassleitung 46 eingebracht ist. Zwei weitere Bohrungen 54, welche senkrecht zur zentralen Bohrung 52 verlaufen, münden in dieser und bilden somit die zweiten Verbindungsleitungen 44. Somit ist die Kammer 40, in der die beiden in der Turbinenschaufel 20 strömenden Medien M1, M2 erstmalig gemischt werden, im Inneren des Einsatzes 50 vorgesehen und somit vollständig von dem Einsatz 50 begrenzt. Folglich gehen auch die Verbindungsleitungen 42, 44 ansatzlos in die Kammer 40 über.

Dabei sind die aufgereihten Auslassleitungen 46 über die sich entlang der Radialrichtung erstreckende Höhe H des Schaufelblattes 24 gleichmäßig verteilt, so dass das zu der Reihe senkrecht strömende Heißgas 11 über die gesamte Höhe H des Schaufelblattes 24 gleichmäßig mit dem Gemisch behandelt werden kann.

Mit einer derartigen Turbinenschaufel 20 mit dem Schaufelblatt 24 und mit mehreren Einsätzen 50 ist es möglich, die Zugabe und Vermischung von Fluiden vergleichsweise einfach in einer Turbinenschaufel 20 herzustellen, ohne die gusstechnische Herstellung des Grundkörpers bzw. der Schaufelwände 30, 32 unnötig schwierig zu gestalten.

Gemäß FIG 6 können die Einsätze 50 in dem Bereich der Turbinenschaufel 20 vorgesehen sein, in welche Schockwellen des Heißgases 11 auf der Turbinenschaufel 20 auftreffen. Dies ist insbesondere dann vor Vorteil, wenn es sich bei dem Gemisch um ein brennbares Gemisch handelt, welches durch die Schockwellen weiter vermischt und durch die im Heißgas 11 herrschende Temperatur durch Selbstzündung zum Nachheizen der Kühlluft bzw. des Heißgases 11 verbrannt werden soll. Eine besonders gute Durchmischung des Gemischs führt dann zu einer besonders emissionsarmen Verbrennung, so dass die dadurch dem Heißgas 11 nachträglich, d. h. außerhalb der Brennkammer zugeführte Energie besonders emissionsarm erzeugt werden kann. Die zugeführte Energie kann dementsprechend zur Leistungssteigerung der Gasturbine und zur Erhöhung des Wirkungsgrades genutzt werden.

FIG 5 zeigt den Druckverlauf im Heißgas 11 entlang der Sehnenlänge der Turbinenschaufel 20. Dabei zeigt die mit PS bezeichnete Kennlinie den Druck im Heißgas 11, welcher entlang der druckseitigen Schaufelwand 32 auftritt und die mit SS gekennzeichnete Linie den Druckverlauf der Strömung des Heißgases 11 entlang der saugseitigen Schaufelwand 30. Die Einsätze 50 und somit die Eindüsung des Gemischs in das Heißgas 11 erfolgt an geeigneten Stellen, was in FIG 6 angedeutet ist. Beispielsweise sind Einsatze 50 im hinteren Drittel der saugseitigen Schaufelwand 30 vorgesehen, gemessen am Abstand zwischen Vorderkante 26 und Hinterkante 28 des Schaufelblatts 24 und/oder im vorderen Drittel der druckseitigen Schaufelwand 32, da in diesen Abschnitten im Heißgas 11 ohnehin vorhandene Wirbel, beispielsweise Schockwellen oder Wirbelschleppen, auf die Schaufelwände 30, 32 auftreffen. Auf jeden Fall lässt sich das Mischungsverhalten des Gemischs mit dem Heißgas 11 durch das Strömungsfeld und durch das Druckfeld des das Schaufelblatt 24 umströmenden Heißgases 11 je nach Positionierung der Einblasstelle für das Gemisch wesentlich beeinflussen.

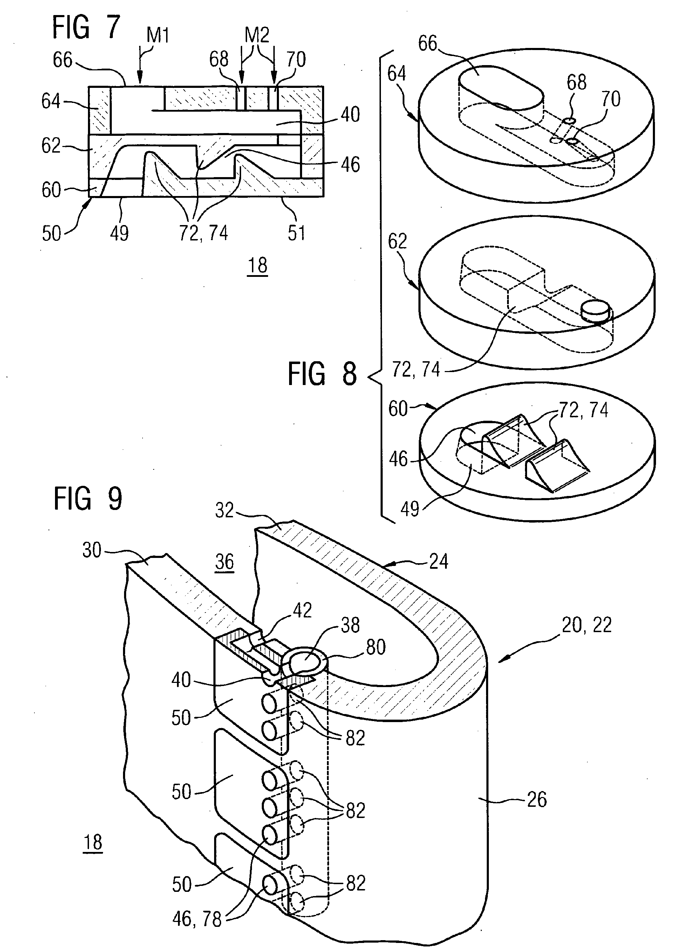

FIG 7 zeigt einen weiteren Einsatz 50 im Querschnitt und FIG 8 zeigt den Einsatz 50 gemäß FIG 7 in einer explosionsartigen Darstellung. Der Einsatz 50 gemäß FIG 7 umfasst drei schichtweise angeordnete zylindrische Schichtelemente 60, 62, 64, um ein besonders komplexes Kanalsystem mit der Kammer 40 und der Auslassleitung 46 besonders einfach und kostengünstig herzustellen. Die drei Schichtelemente 60, 62, 64 weisen unterschiedlich gestaltete Ausnehmungen auf, die jedoch jeweils, sofern die drei Schichtelementen 60, 62, 64 unmittelbar aneinander liegen, ineinander übergehen und den in FIG 7 gezeigten Strömungsweg bzw. das Kanalsystem bilden. Der Einsatz 50 kann beispielsweise in die Schaufelwand 32 oder die Plattform der Turbinenschaufel 20 eingesetzt werden. Das Schichtelement 64 weist dazu drei Öffnungen 66, 68, 70 auf, wobei der Öffnung 66 im eingebauten Zustand das erste Medium M1 und den Öffnungen 68, 70 das zweite Medium M2 zuführbar ist. Die beiden in den Einsatz 50 strömende Medien M1, M2 strömen aufgrund des Druckgefälles zu einem Bereich, in dem sie sich vermischen. Dieser Bereich ist die Kammer 40, die in diesem Fall sowohl von dem Schichtelement 64 als auch dem Schichtelement 62 begrenzt wird. Von hier aus strömt das Gemisch weiter entlang eines mäanderförmigen Kanals, welcher von den beiden Schichtelementen 60, 62 begrenzt wird. Der mäanderförmige Kanal stellt die Auslassleitung 46 dar und mündet in einer Öffnung 49, welche in der Oberfläche 51 des Schichtelementes 60 vorgesehen ist. Die Oberfläche 51 des Schichtelementes 60 ist im eingebauten Zustand dem Heißgas 11 ausgesetzt, so dass das in der Kammer 40 hergestellte Gemisch nach dem Ausströmen aus der Auslassleitung 46 in das Heißgas 11 einströmen kann. Die Schichtelemente 60, 62 weisen nach Art von hervorstehenden Zähnen 72 unterschiedlich geformte Mischerelemente 74 oder Verwirbelungselemente auf, um die Mäanderform der Auslassleitung 46 herzustellen. Eine besonders homogene Vermischung des durch die Auslassleitung 46 strömenden Gemisches wird durch die Mäanderform und durch die vergleichsweise lange Mischstrecke, d.h. Auslassleitung 46 erreicht, was im Rahmen der üblichen gusstechnischen Herstellung des Schaufelblattes 24 nahezu nicht möglich wäre. Für den Fall, dass es sich um ein brennbares Gemisch handelt, kann dieses nachfolgend im Heißgasraum 18 zur Nachheizung des Heißgases 11 emissionsarm verbrennen.

Eine weitere Ausgestaltung der Erfindung zeigt FIG 9, bei der in der saugseitigen Schaufelwand 30 der Turbinenschaufel 20 im wesentlichen rechteckige Ausnehmungen vorhanden sind, in die dazu korrespondierende Einsätze 50 eingesetzt sind. In jedem der Einsätze 50 sind mehrere Bohrungen 78 vorgesehen, die eingangsseitig mit dem zweiten Kanal 38, welcher von einem in der Wand eingesetzten Rohr 80 gebildet wird, verbunden sind und ausgangsseitig im Heißgasraum 18 münden. Das mit weiteren Bohrungen 82 versehene Rohr 80 war Teil eines Gusskerns, welcher nach dem Gießen des Schaufelblattes 24 in diesem verblieb. Das dem ersten Kanal 36 zugeführte Medium M1 strömt über erste Verbindungsleitungen 42 in die Kammer 40 ein, welche im Einsatz 50 angeordnet sind. Das aus dem zweiten Kanal 38 durch die weiteren Bohrungen 82 austretende zweite Medium M2 strömt über die zweiten Verbindungsleitungen 44 in die Kammer 40 und vermischt sich an dieser Stelle mit dem erstem Medium M1, welches dabei entstehende Gemisch anschließend durch die Auslassleitung 46 in den Heißgasraum 18 einströmt.

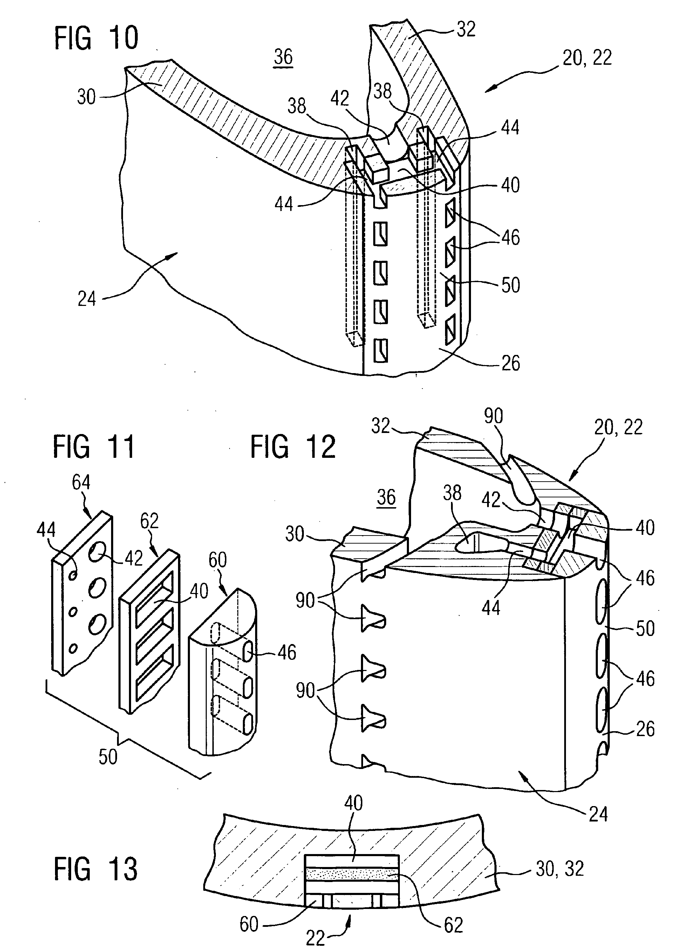

Eine weitere Ausgestaltung der Erfindung zeigt FIG 10, in der der einstückige Einsatz 50 in der Vorderkante 26 der Turbinenschaufel 20 eingesetzt ist. In der im Einsatz 50 vorgesehen Kammer 40 werden die beiden Medien M1 und M2 vermischt, welche nach in FIG 2 gezeigter Art und Weise dieser zu- und abführbar sind.

Sofern das Gemisch an der Vorderkante 26 der Turbinenschaufel zum Nachheizen des Heißgases 11 ausströmt, kann eine größtmögliche Reaktionsstrecke erreicht werden, da das Gemisch spätestens bei Erreichen der nachgeordneten stromabwärtigen Schaufelreihe verbrannt sein soll.

FIG 11 zeigt einen weiteren sich aus drei Schichtelementen 60, 62, 64 zusammensetzenden Einsatz 50 in einer Explosionsdarstellung. Durch die mit unterschiedlichen Ausnehmungen ausgestatteten Schichtelemente 60 ist es möglich, das erste Medium M1 und das zweite Medium M2 getrennt der Kammer 40 zuzuführen, welche sich in dieser vermischen und durch eine Auslassleitung 46 in das Heißgas 11 ausgeblasen werden können. Gemäß FIG 12 ist vorsehen, dass der von den drei aneinander liegenden Schichtelementen 60, 62, 64 gebildete Einsatz 50 in der Vorderkante 26 der Turbinenschaufel 20 vorgesehen sein kann.

Das in der Turbinenschaufel 20 zuerst einzusetzende Schichtelement 64 weist eine Vielzahl von gebohrten ersten und zweiten Verbindungsleitungen 42, 44 auf. Die gebohrten Verbindungsleitungen 42, 44 sind mit erhöhter Präzision, verglichen mit einer Gussherstellung, zuverlässig herstellbar, so dass die dadurch ausströmenden Medien M1, M2 dadurch bedarfgerecht dosiert werden können. Das daran anliegende Schichtelement ist mit mehreren, jeweils mit einem der ersten und einem der zweiten Verbindungsleitungen 42, 44 fluchtenden rechteckigen Aussparungen versehen, welche jeweils die Kammer 40 teilweise begrenzt. In dem in der Turbinenschaufel 20 außen, d.h. heißgasseitig angeordneten Schichtelement 60 sind Bohrungen als Auslassleitungen 46 vorgesehen, an deren die Bohrung begrenzenden Innenwände ebenfalls Mischer- oder Verwirbelungselemente vorgesehen sein können.

Andere Bereiche des Schaufelblattes 24 sind ebenfalls geeignet, um einen derartigen Einsatz 50 aufzunehmen und um das Gemisch an einer anderen Stelle als der Vorderkante 26 der Turbinenschaufel 20 auszublasen. Außerdem zeigt FIG 12, dass durch schräg in der dem Heißgas 11 ausgesetzten Oberfläche der Schaufelwände 30, 32 mündende, in einer Reihe liegenden Öffnungen 90 mit dem ersten Kanal 36 in Verbindung stehen. Das durch diese Öffnungen 90 ausströmende Medium M1, beispielsweise Kühlluft, kann aufgrund der konturierten diffusorartigen Form der Öffnungen 90 einen flächigen Film ausbilden, der die Schaufeloberfläche bzw. die Schaufelwände 30, 32 vor dem Heißgas 11 schützt, insbesondere vor dessen Temperaturen.

FIG 13 zeigt einen modularen Einsatz 50 in der Schaufelwand 30, 32 der Turbinenschaufel 20, welcher aus zwei zueinander beabstandeten Schichtelementen 60, 62 besteht, wobei das innere die Mischkammer 40 begrenzende Schichtelement 62 aus einem porösen Material besteht und das dem Heißgas 11 ausgesetzte Schichtelement 60 als blechartiges Element mit Öffnungen versehen ist, durch die das in der Kammer 40 gebildete Gemisch austreten kann.

## Patentansprüche

1. Turbinenschaufel (20) für eine Turbine,
mit einer Schaufelwand (30, 32) und
mit einem ersten Kanal (36) zum Führen eines ersten Mediums (M1) und einem zweiten Kanal (38) zum Führen eines der Turbinenschaufel (20) vom ersten Medium (M1) getrennt zuführbaren zweiten Mediums (M2),
wobei die Turbinenschaufel (20) zum Vermischen der beiden getrennt zuführbaren Medien (M1, M2) zu einem Gemisch mindestens eine im Inneren oder in der Schaufelwand (32, 34) angeordnete Kammer (40) aufweist, die mit beiden Kanälen (36, 38) über jeweils eine Verbindungsleitung (42, 44) verbunden ist und
wobei zum Abführen des Gemischs aus der Kammer (40) mindestens eine mit der Kammer (40) verbundene Auslassleitung (46) in den Heißgasraum (18) mündet,
**dadurch gekennzeichnet, dass**
die Kammer (40) und/oder die Auslassleitung (46) durch einen in der Schaufelwand (32, 34) sitzenden Einsatz (50) zumindest teilweise begrenzt bzw. gebildet ist.

2. Turbinenschaufel (20) nach Anspruch 1,
bei dem die Schaufelwand (32, 34) in ihrer dem Heißgasraum (18) zugewandten Oberfläche (51) eine Ausnehmung mit einer insbesondere rechteckigen oder kreisrunden Kontur aufweist, in welche der zur Kontur der Ausnehmung korrespondierende Einsatz (50) eingesetzt ist.

3. Turbinenschaufel (20) nach Anspruch 1 oder 2,
mit einer Anzahl von Kammern (40), der jeweils mindestens eine Auslassleitung (46) zugeordnet ist.

4. Turbinenschaufel (20) nach Anspruch 1, 2 oder 3,
bei dem in der Auslassleitung (46) Verwirbelungselemente vorgesehen sind.

5. Turbinenschaufel (20) nach einem der vorangehenden Ansprüche,
bei dem jede Kammer (40) und die jeweils mit ihr verbundene Auslassleitung (46) mittels eines separaten Einsatzes (50) gebildet ist.

6. Turbinenschaufel (20) nach einem der Ansprüche 1 bis 4,
bei dem eine Gruppe von Kammern (40) und die mit diesen Kammern (40) verbundenen Auslassleitungen (46) mittels eines separaten Einsatzes (50) gebildet sind.

7. Turbinenschaufel (20) nach einem der vorangehenden Ansprüche,
bei dem jeder Einsatz (50) mehrere Auslassleitungen (46) aufweist.

8. Turbinenschaufel (20) nach einem der vorangehenden Ansprüche,
bei dem der Einsatz (50) mehrteilig ausgebildet ist.

9. Turbinenschaufel (20) nach Anspruch 8,
bei dem der Einsatz (50) aus mehreren, gestapelten Schichtelementen (60, 62, 64) gebildet ist.

10. Turbinenschaufel (20) nach einem der vorangehenden Ansprüche,
bei dem der Einsatz (50) heißgasseitig ein poröses Material oder Schaum aufweist.

11. Turbinenschaufel (20) nach einem der vorangehenden Ansprüche,
bei dem die Auslassleitung (46) in einem Bereich der Schaufelwand (30, 32) mündet, in dem im Heißgas (11) auftretende Schockwellen auftreffen.

12. Turbinenschaufel (20) nach Anspruch 11,
mit einem Schaufelblatt (24),
welches Schaufelblatt (24) eine saugseitige Schaufelwand (30) und eine druckseitige Schaufelwand (32) umfasst, wobei die Schaufelwände (30, 32) entlang einer Sehne sich von einer Vorderkante (26) zu einer Hinterkante (28) mit einer Sehnenlänge erstrecken und
bei dem die Auslassleitung (46) - in Strömungsrichtung des das Schaufelblatt (24) umströmenden Heißgases (11) gesehen - im hinteren Drittel der Sehnenlänge in der Oberfläche (51) der saugseitigen Schaufelwand (30) mündet.

13. Turbinenschaufel (20) nach einem der vorangehenden Ansprüche,
deren die Schaufelwand (30, 32) bildender Grundkörper gegossen ist.

14. Turbinenschaufel (20) nach Anspruch 13,
bei dem der Einsatz (50) mit dem Grundkörper verschweißt oder verlötet ist.

15. Gasturbine mit einer Turbinenschaufel (20) nach einem der Ansprüche 1 bis 14.

## Claims

1. Turbine blade (20) for a turbine,
with a blade wall (30, 32) and
with a first passage (36) for guiding a first medium (M1) and a second passage (38) for guiding a second medium (M2) which can be fed to the turbine blade (20) separately from the first medium (M1),
wherein for mixing the two separately feedable media (M1, M2) to form a mixture, the turbine blade (20) has at least one chamber (40) which is arranged on the inside or in the blade wall (30, 32) and connected to the two passages (36, 38) via a connecting line (42, 44) in each case, and wherein for discharging the mixture from the chamber (40) at least one outlet line (46), which is connected to the chamber (40), leads into the hot gas space (18),
**characterized in that**
the chamber (40) and/or the outlet line (46) are at least partially delimited or formed by means of an insert (50) which is seated in the blade wall (30, 32).

2. Turbine blade (20) according to Claim 1,
in which the blade wall (30, 32), in its surface (51) which faces the hot gas space (18), has a recess with an especially rectangular or circular contour, in which the insert (50), which corresponds to the contour of the recess, is inserted.

3. Turbine blade (20) according to either of claims 1 or 2,
with a number of chambers (40), with which at least one outlet line (46) is associated in each case.

4. Turbine blade (20) according to Claim 1, 2 or 3,
in which swirl elements are provided in the outlet line (46).

5. Turbine blade (20) according to one of the preceding claims,
in which each chamber (40) and the outlet line (46) which is connected to it in each case is formed by means of a separate insert (50).

6. Turbine blade (20) according to one of Claims 1 to 4,
in which a group of chambers (40) and the outlet lines (46) which are connected to these chambers (40) are formed by means of a separate insert (50).

7. Turbine blade (20) according to one of the preceding claims,
in which each insert (50) has a plurality of outlet lines (46).

8. Turbine blade (20) according to one of the preceding claims,
in which the insert (50) is formed from a plurality of sections.

9. Turbine blade (20) according to Claim 8,
in which the insert (50) is formed from a plurality of stacked layer elements (60, 62, 64).

10. Turbine blade (20) according to one of the preceding claims,
in which the insert (50) has a porous material or foam on the hot gas side.

11. Turbine blade (20) according to one of the preceding claims,
in which the outlet line (46) leads to a region of the blade wall (30, 32) in which shock waves, which occur in the hot gas (11), impact.

12. Turbine blade (20) according to Claim 11,
with a blade airfoil (24),
which blade airfoil (24) comprises a suction-side blade wall (30) and a pressure-side blade wall (32),
wherein the blade walls (30, 32) extend along a chord with a chord length from a leading edge (26) to a trailing edge (28), and
in which the outlet line (46) leads to the surface (51) of the suction-side blade wall (30) in the rear third of the chord length, as seen in the flow direction of the hot gas (11) which flows around the blade airfoil (24).

13. Turbine, blade (20) according to one of the preceding claims,
the basic body of which, which forms the blade wall (30, 32), is cast.

14. Turbine blade (20) according to Claim 13,
in which the insert (50) is welded or soldered to the basic body.

15. Gas turbine with a turbine blade (20) according to one of Claims 1 to 14.

## Revendications

1. Aube ( 20 ) pour une turbine,
comprenant une paroi ( 30, 32 d'aube et
comprenant un premier canal ( 36 ) pour conduire un premier milieu ( M1 ) et un deuxième canal ( 38 ) pour conduire un deuxième milieu ( M2 ) à envoyer à l'aube ( 20 ) de turbine, d'une façon séparée du premier milieu ( M1 ),
dans laquelle l'aube ( 20 ) de turbine a, pour mélanger les deux milieux ( M1, M2 ) pouvant être amenés de manière séparée en un mélange, au moins une chambre ( 40 ) qui est disposée à l'intérieur ou dans la paroi ( 32, 34 ) de l'aube et qui communique avec les deux canaux ( 36, 38 ) par respectivement un conduit ( 42, 44 ) de liaison et
dans laquelle, pour évacuer le mélange de la chambre ( 40 ), au moins un conduit ( 46 ) de sortie communiquant avec la chambre ( 40 ) débouche dans l'espace ( 18 ) pour du gaz chaud,
**caractérisée en ce que**
la chambre ( 40 ) et/ou le conduit ( 46 ) de sortie sont délimités ou formés au moins en partie par un insert ( 50 ) mis dans la paroi ( 32, 34 ) de l'aube.

2. Aube ( 20 ) pour une turbine suivant la revendication 1, dans laquelle la paroi ( 32, 34 ) de l'aube a, dans sa surface ( 51 ) tournée vers l'espace ( 18 ) pour du gaz chaud, un évidement ayant un contour, notamment rectangulaire ou circulaire, dans lequel l'insert ( 50 ) correspondant au contour de l'évidement est inséré.

3. Aube ( 20 ) pour une turbine suivant la revendication 1 ou 2,
comprenant un certain nombre de chambres ( 40 ) auxquelles est associé respectivement au moins un conduit ( 46 ) de sortie.

4. Aube ( 20 ) pour une turbine suivant la revendication 1, 2 ou 3,
dans laquelle des éléments de tourbillonnement sont prévus dans le conduit ( 46 ) de sortie.

5. Aube ( 20 ) pour une turbine suivant l'une des revendications précédentes,
dans laquelle chaque chambre ( 40 ) et le conduit ( 46 ) de sortie qui communique avec elle est formé au moyen d'un insert ( 50 ) distinct.

6. Aube ( 20 ) pour une turbine suivant l'une des revendications 1 à 4,
dans laquelle un groupe de chambres ( 40 ) et les conduits ( 46 ) de sortie qui communiquent avec ces chambres ( 40 ) sont formés au moyen d'un insert ( 50 ) distinct.

7. Aube ( 20 ) pour une turbine suivant l'une des revendications précédentes,
dans laquelle chaque insert ( 50 ) comporte plusieurs conduits ( 46 ) de sortie.

8. Aube ( 20 ) pour une turbine suivant l'une des revendications précédentes,
dans laquelle l'insert ( 50 ) est constitué en plusieurs parties.

9. Aube ( 20 ) pour une turbine suivant la revendication 8,
dans laquelle l'insert ( 50 ) est formé de plusieurs éléments ( 60, 62, 64 ) stratifiés empilés.

10. Aube ( 20 ) pour une turbine suivant l'une des revendications précédentes,
dans laquelle l'insert ( 50 ) a du côté du gaz chaud un matériau poreux ou de la mousse.

11. Aube ( 20 ) pour une turbine suivant l'une des revendications précédentes,
dans laquelle le conduit ( 46 ) de sortie débouche dans une partie de la paroi ( 30, 32 ) de l'aube, dans laquelle des ondes de choc se produisant dans le gaz ( 11 ) chaud apparaissent.

12. Aube ( 20 ) pour une turbine suivant la revendication 11, comprenant une lame ( 24 ) d'aube,
laquelle lame ( 24 ) d'aube comprend une paroi ( 30 ) d'extrados et une paroi ( 32 ) d'intrados, les parois ( 30, 32 ) s'étendant le long d'une corde allant d'un bord ( 26 ) avant à un bord ( 28 ) arrière en ayant une longueur de corde et
dans laquelle le conduit ( 46 ) de sortie débouche - considéré dans le sens d'écoulement du gaz ( 11 ) chaud passant devant la lame ( 24 ) de l'aube, dans le tiers arrière de la longueur de corde dans la surface ( 51 ) de la paroi ( 30 ) d'extrados de l'aube.

13. Aube ( 20 ) pour une turbine suivant l'une des revendications précédentes,
dont le corps de base formant la paroi ( 30, 32 ) de l'aube est coulée.

14. Aube ( 20 ) pour une turbine suivant la revendication 13,
dans laquelle l'insert est soudé ou brasé avec le corps de base.

15. Turbine à gaz ayant une aube ( 20 ) de turbine suivant l'une des revendications 1 à 14.
